# EUROPEAN PATENT APPLICATION

(11) **EP 4 773 231 A2**
(43) Date of publication of application: **08.07.2026**
(21) Application number: 25208868.7
(22) Date of filing: 15.10.2025
(51) Int. Cl.: H01M 4/36, H01M 10/0525

(54) **POSITIVE ELECTRODE FOR RECHARGEABLE LITHIUM BATTERY, ELECTRODE ASSEMBLY FOR RECHARGEABLE LITHIUM BATTERY, AND RECHARGEABLE LITHIUM BATTERY INCLUDING THE SAME**

(30) Priority: 18.10.2024 KR 20240143292
(71) Applicant: SAMSUNG SDI CO., LTD., Yongin-si, Gyeonggi-do 17084 (KR)
(72) Inventor: LEE, Hyunjin, Yongin-si, Gyeonggi-do 17084 (KR)
(74) Representative: Michalski Hüttermann & Partner mbB

(57) **Abstract**

Disclosed are a positive electrode for a rechargeable lithium battery, and an electrode assembly for a rechargeable lithium battery including the positive electrode, and a rechargeable lithium battery. The positive electrode includes a positive electrode current collector, a positive electrode active material layer on at least one surface of the positive electrode current collector, and an insulating layer on at least one surface of the positive electrode current collector. The positive electrode active material layer includes a first positive electrode active material layer having a constant thickness, and a second positive electrode active material layer located at an edge portion of the positive electrode current collector and having a thickness of about 10% to about 80% of the thickness of the first positive electrode active material layer. The insulating layer is disposed on the second positive electrode active material layer.

## Description

### BACKGROUND

### 1. Field

A positive electrode for a rechargeable lithium battery, and an electrode assembly for a rechargeable lithium battery including the positive electrode, and a rechargeable lithium battery are disclosed.

### 2. Description of the Related Art

Rechargeable lithium batteries are typically used as a driving power source for mobile information terminals such as, e.g., smart phones and laptops, and the like, because rechargeable lithium batteries are easy or convenient to carry and exhibit high energy density. Accordingly, rechargeable lithium batteries with high safety and high capacity may be advantageous as power sources for hybrid or electric vehicles, or as power storage power sources.

An electrode plate for the rechargeable lithium batteries is manufactured by mixing a slurry including an electrode active material, coating the slurry on an electrode current collector to form an electrode active material layer, then, drying, pressing, and slitting the electrode plate, and wrapping the electrode plate with in a reel shape and storing the electrode plate to put the electrode plate into a notching process.

When the electrode plate manufactured according to such a process is used to assemble a cell, a separator may be shrunk as charge/discharge progresses, which may make a positive electrode current collector and a negative electrode active material layer contact each other and thus cause a short circuit.

In order to hinder or prevent the short circuit, technology for applying insulation coating at an end portion of a positive electrode active material layer is known. However, because the known insulating layer is coated immediately after, or simultaneously or contemporaneously with, the positive electrode active material layer, the insulating layer is overlapped with the positive electrode active material layer due to running spread of the coating, causing a so-called rising phenomenon, in which a thickness in one region becomes thicker than in the other region. This rising phenomenon may bring about a problem of deteriorating quality and processability of the electrode plate and leaving an uncoated region, and when coating both surfaces of the electrode plate, a problem of increasing a cost in terms of equipment configuration and materials.

### SUMMARY

Some example embodiments include a positive electrode for a rechargeable lithium battery, which can reduce or suppress a rising phenomenon during a process of manufacturing an electrode plate by forming a second positive electrode active material layer located at an end portion of a positive electrode current collector separately from a first positive electrode active material layer located at the center portion of a positive electrode current collector. The process also includes forming an insulating layer on the second positive electrode active material layer. The example embodiments also include an electrode assembly for a rechargeable lithium battery including the positive electrode, and a rechargeable lithium battery.

In some example embodiments, a positive electrode includes a positive electrode current collector, a positive electrode active material layer on at least one surface of the positive electrode current collector, and an insulating layer on at least one surface of the positive electrode current collector. The positive electrode active material layer includes a first positive electrode active material layer having a constant thickness, and a second positive electrode active material layer located at an edge portion of the positive electrode current collector and having a thickness in a range of about 10% to about 80% of the thickness of the first positive electrode active material layer. The insulating layer is disposed on the second positive electrode active material layer, and a sum of a thickness of the second positive electrode active material layer and a thickness of the insulating layer is smaller than a thickness of the first positive electrode active material layer.

In some example embodiments, an electrode assembly includes the positive electrode, a negative electrode, and a separator between the positive electrode and the negative electrode.

In some example embodiments, a rechargeable lithium battery including the electrode assembly is provided.

The positive electrode for a rechargeable lithium battery according to some example embodiments forms a second positive electrode active material layer located at an end portion of a positive electrode current collector separately from a first positive electrode active material layer located at the center portion of a positive electrode current collector, and forms an insulating layer on the second positive electrode active material layer, thereby reducing or suppressing a rising phenomenon during a process of manufacturing an electrode plate.

### BRIEF DESCRIPTION OF THE DRAWINGS

FIG. 1 schematically illustrates a conventional positive electrode in which an insulating layer is formed on a positive electrode active material layer.
FIG. 2 schematically illustrates a positive electrode according to some example embodiments.
FIG. 3 schematically illustrates only one surface of a positive electrode based on a positive electrode current collector according to some example embodiments.
FIG. 4 is an enlarged drawing of the second positive electrode active material layer and the insulating layer in the positive electrode according to some example embodiments.
FIG. 5 schematically illustrates a stacking process of an electrode assembly in which an insulating layer is coated on both surfaces of the positive electrode current collector.
FIG. 6 schematically illustrates a stacking process of an electrode assembly in which an insulating layer is coated on one surface of the positive electrode current collector according to some example embodiments.
FIGS. 7 to 10 are schematic views showing a rechargeable lithium battery according to some example embodiments.
FIG. 11 is a graph showing the thickness of the electrode plate according to the measurement position of the positive electrode according to Example 1.
FIG. 12 is a graph showing the thickness of the electrode plate at each measurement position according to Comparative Example 1.

### DETAILED DESCRIPTION

Hereinafter, example embodiments are described in detail so that those of ordinary skill in the art can readily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, are exaggerated for clarity and like reference numerals designate like elements throughout the specification. It is understood that when an element such as a layer, film, region, or substrate is referred to as being "on" another element, the element can be directly on the other element, or intervening elements may also be present therebetween. In contrast, when an element is referred to as being "directly on" another element, no intervening elements may be present therebetween.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

In some example embodiments, a positive electrode includes a positive electrode current collector, a positive electrode active material layer on at least one surface of the positive electrode current collector, and an insulating layer on at least one surface of the positive electrode current collector. The positive electrode active material layer includes a first positive electrode active material layer having a constant thickness, and a second positive electrode active material layer located at an edge portion of the positive electrode current collector and having a thickness of about 10% to about 80% of the thickness of the first positive electrode active material layer. The insulating layer is disposed on the second positive electrode active material layer, and a sum of a thickness of the second positive electrode active material layer and a thickness of the insulating layer is smaller than a thickness of the first positive electrode active material layer.

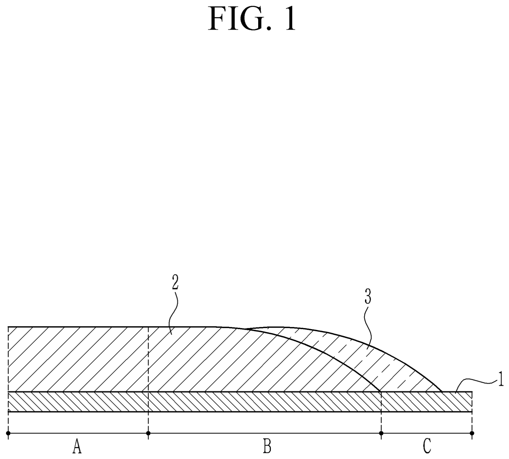

FIG. 1 schematically illustrates a positive electrode in which an insulating layer is formed on a conventional positive electrode active material layer. In FIG. 1, the positive electrode active material layer 2 has a section "A" with a constant, or substantially constant, thickness and a section "B" with a varying thickness due to a coating process, and the insulating layer 3 may be formed in the section "B" with a varying thickness and a section where the positive electrode active material layer does not exist on the positive electrode current collector 1, e.g., the uncoated region "C." This insulating layer 3 is usually coated immediately after, or simultaneously or contemporaneously with, the coating of the positive electrode active material layer 2, and the so-called rising phenomenon may occur, in which the thickness becomes thicker than other regions as the insulating layer 3 is overlapped with the positive electrode active material layer 2 due to the running dispersion of the coating. Due to the rising phenomenon, the quality and processability of the plate deteriorate, and there may be uncoated regions, and when coating is performed on both surfaces of the plate, there may be increased costs in terms of equipment configuration and material costs.

Accordingly, in the positive electrode according to some example embodiments, a first positive electrode active material layer and a second positive electrode active material layer located at an edge portion of a positive electrode current collector are formed through separate processes, and an insulating layer on the second positive electrode active material layer is formed. For example, the second positive electrode active material layer has a thickness in a range of about 10% to about 80% of the thickness of the first positive electrode active material layer, and a sum of the thicknesses of the second positive electrode active material layer and the insulating layer is smaller than a thickness of the first positive electrode active material layer, thereby improving the rising phenomenon.

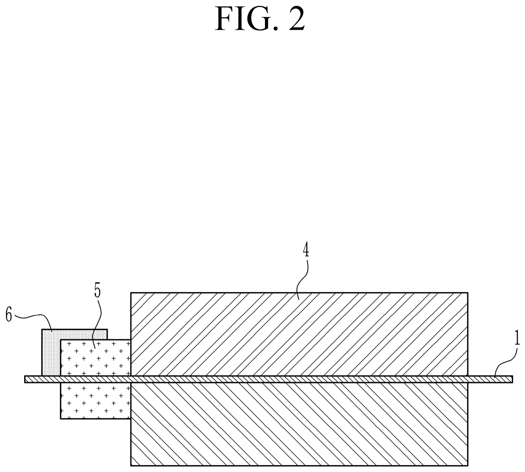

FIG. 2 is a schematic view illustrating a positive electrode according to some example embodiments.

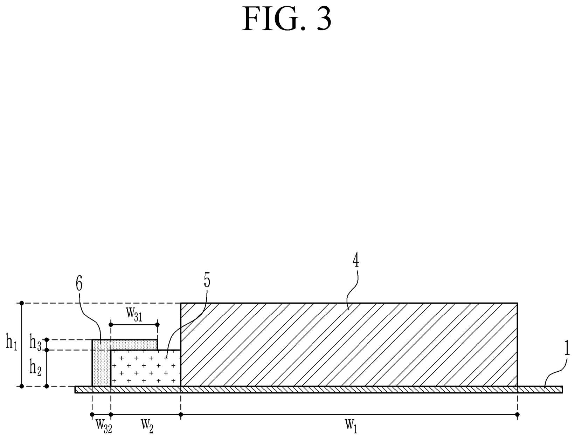

According to some example embodiments, the positive electrode includes, unlike the known positive electrode active material layer, a first positive electrode active material layer 4 on a positive electrode current collector 1, a second positive electrode active material layer 5 at an edge portion of the positive electrode current collector 1, and an insulating layer 6 on at least one surface of the second positive electrode active material layer 5. FIG. 3 schematically illustrates only one surface of a positive electrode based on a positive electrode current collector according to some example embodiments. In FIG. 3, the second positive electrode active material layer 5 has a thickness (h₂) that is smaller than the thickness (h₁) of the first positive electrode active material layer 4, and a sum (h₂+h₃) of the thickness (h₂) of the second positive electrode active material layer and the thickness (h₃) of the portion of the insulating layer 6 that is over the second positive electrode active material layer 5 is smaller than the thickness (h₁) of the first positive electrode active material layer 4. A positive electrode having the above-described structure improves the rising phenomenon that occurs in a conventional positive electrode active material layer with an insulating layer formed thereon. In FIG. 2, for convenience, the thicknesses of the second positive electrode active material layer 5 and the insulating layer 6 are shown to be constant in addition to the first positive electrode active material layer 4, but the present disclosure is not limited thereto. The thickness of the second positive electrode active material layer 5 and the thickness of the insulating layer 6 may vary independently, or may be constant. Herein, the thickness of the first positive electrode active material layer 4, the thickness of the second positive electrode active material layer 5, and the thickness of the insulating layer 6 may be measured in the vertical direction of the positive electrode current collector, and when the thickness is different at each measurement point, the thickness may indicate the arithmetic mean thickness. In addition, the thickness of the insulating layer is based on the thickness of the insulating layer on the second positive electrode active material layer 5, and is the same even when disposed on the positive electrode current collector 1 along the edge of the second positive electrode active material layer 5 as further described below.

The thickness of the second positive electrode active material layer 5 is in a range of about 10% to about 80%, for example, about 20% to about 70%, about 30% to about 60%, or about 40% to about 55% of the thickness of the first positive electrode active material layer. When the thickness of the second positive electrode active material layer 5 satisfies the above range compared to the thickness of the first positive electrode active material layer 4, the occurrence of a rising phenomenon can be reduced or prevented.

For example, a ratio ((h₂+h₃)/h₁) of the sum of the thickness (h₂) of the second positive electrode active material layer 5 and the thickness (h₃) of the insulating layer 6 to the thickness (h₁) of the first positive electrode active material layer 4 may be in a range of about 0.1 to about 1.0, for example, about 0.15 to about 0.9, about 0.2 to about 0.8, about 0.25 to about 0.7, about 0.25 to about 0.6, or about 0.3 to about 0.5. When the ratio ((h₂+h₃)/h₁) of the sum of the thickness (h₂) of the second positive electrode active material layer 5 and the thickness (h₃) of the insulating layer 6 to the thickness (h₁) of the first positive electrode active material layer 4 satisfies the above range, insulating performance may be secured and the occurrence of a rising phenomenon may be reduced or prevented.

Hereinafter, the components that constitutes the positive electrode are further described in detail.

### Positive Electrode Active Material Layer (first positive electrode active material layer and second positive electrode active material layer)

According to some example embodiments, a positive electrode active material layer includes a first positive electrode active material layer 4 and a second positive electrode active material layer 5 having different thicknesses. Herein, the first positive electrode active material layer 4 and the second positive electrode active material layer 5 are described as "first" and "second" only to distinguish that they have different thicknesses, and other aspects such as composition may be different or the same, except for the thickness.

The first positive electrode active material layer 4 and the second positive electrode active material layer 5 are disposed on at least one surface of the positive electrode current collector 1. For example, the first positive electrode active material layer 4 and the second positive electrode active material layer 5 may be disposed on both surfaces of the positive electrode current collector 1 as illustrated in FIG. 2. However, FIG. 2 only shows a positive electrode according to some example embodiments, and both the first positive electrode active material layer 4 and the second positive electrode active material layer 5 may be disposed on one surface of the positive electrode current collector 1, or only one of the first positive electrode active material layer 4 and the second positive electrode active material layer 5 may be disposed on one surface of the positive electrode current collector 1, or both may be disposed on both surfaces of the positive electrode current collector 1.

The thickness of the first positive electrode active material layer 4 may be maintained constant. Typically, when manufacturing a positive electrode, the positive electrode active material layer has sections with a constant thickness and sections with varying thickness, as shown in FIG. 1. However, the first positive electrode active material according to some example embodiments may only have sections with a constant thickness.

The second positive electrode active material layer 5 is disposed at the edge portion of the positive electrode current collector 1. Herein, the edge portion of the positive electrode current collector 1 refers to a region on the positive electrode current collector 1 where the first positive electrode active material layer 4 is not formed (uncoated region), generally the edge of the positive electrode current collector 1. According to some example embodiments, a positive electrode has a second positive electrode active material layer 5 having a thickness in a range of about 10% to about 80% of the thickness of the first positive electrode active material layer 4, and is disposed on a positive electrode current collector 1 where the first positive electrode active material layer 4 is not present, so that even when an insulating layer 6 is disposed on the second positive electrode active material layer 5, the rising phenomenon that occurs in a known positive electrode in which an insulating layer 6 is disposed in a section where the thickness of the positive electrode active material layer changes may be improved.

Hereinafter, a width of the first positive electrode active material layer 4, a width of the second positive electrode active material layer 5, and a width of the insulating layer 6 are described below with reference to FIG. 3.

The width (w₁) of the first positive electrode active material layer 4 may be in a range of about 50 mm to about 500 mm, for example, about 70 mm to about 400 mm, about 100 mm to about 300 mm, or about 150 mm to about 250 mm.

The width (w₂) of the second positive electrode active material layer 5 may be in a range of about 1 mm to about 5 mm, for example, about 1 mm to about 4.5 mm, about 2 mm to about 4.5 mm, about 3 mm to about 4.5 mm, or about 3.5 mm to about 4.5 mm. When the width of the second positive electrode active material layer 5 satisfies the above range, it is possible to secure plate processability and desired or improved energy density. The width (w₁) of the first positive electrode active material layer 4 and the width (w₂) of the second positive electrode active material layer 5 may be measured in the horizontal direction of the positive electrode current collector 1 in the region where the first positive electrode active material layer 4 and the second positive electrode active material layer 5 exist on the positive electrode current collector in the cross-section of the positive electrode, as illustrated in FIG. 3.

An area of the positive electrode active material layer (a sum of the areas of the first positive electrode active material layer 4 and the second positive electrode active material layer 5) may be equal to or smaller than an area of one side of the positive electrode current collector 1, and for example, a ratio of the area of the positive electrode active material layer to the area of the positive electrode current collector may be in a range of about 0.7 to about 0.99, or about 0.8 to about 0.9. Accordingly, a portion of the surface of the positive electrode current collector may be exposed without being covered by the positive electrode active material layer, and a surface of the positive electrode current collector that is exposed without the positive electrode active material layer coated, i.e., an uncoated region, may exist.

The first positive electrode active material layer 4 and the second positive electrode active material layer 5 may be in contact with each other. When the first positive electrode active material layer 4 and the second positive electrode active material layer 5 are in contact with each other, a mixed region may exist at the interface where the components of the first positive electrode active material layer 4 and the components of the second positive electrode active material layer 5 are mixed.

A positive electrode including the first positive electrode active material layer 4 and the second positive electrode active material layer 5 satisfying the above-described conditions can improve the rising phenomenon.

The first positive electrode active material layer 4 and the second positive electrode active material layer 5 include positive electrode active materials such as, e.g., known positive electrode active materials. That is, the first positive electrode active material layer 4 may include a first positive electrode active material, and the second positive electrode active material layer 5 may include a second positive electrode active material. Herein, the first positive electrode active material and the second positive electrode active material are only intended to distinguish between the positive electrode active material included in the first positive electrode active material layer 4 and the positive electrode active material included in the second positive electrode active material layer 5, and do not indicate a priority or necessarily a difference between them. Hereinafter, it should be understood that the absence of "first" and "second" indicates content that may be common to the first positive electrode active material layer 4 and the second positive electrode active material layer 5.

As the positive electrode active material, a compound capable of intercalating and deintercalating lithium (lithiated intercalation compound) may be used. For example, at least one composite compound of lithium and a metal such as or including at least one of cobalt, manganese, nickel, and a combination thereof may be used.

The composite compound may be or include a lithium transition metal composite compound, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, a lithium-manganese-rich composite oxide, or a combination thereof.

As an example, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may include a lithium nickel-based composite oxide represented by Chemical Formula 6, a lithium cobalt-based composite oxide represented by Chemical Formula 7, or a combination thereof.

Chemical Formula 6: Liₐ₆Niₓ₆M⁶_{y6}M⁷_{z6}O_{2-b6}X_{b6}

In Chemical Formula 6, 0.9≤a6≤1.8, 0.3≤x6≤1, 0≤y6≤0.7, 0≤z6≤0.7, 0.9≤x6+y6+z6≤1.1, and 0≤b6≤0.1, M⁶ and M⁷ are each independently one or more elements such as or including at least one of Al, B, Ba, Ca, Ce, Co, Cr, Cu, Fe, Mg, Mn, Mo, Nb, Si, Sn, Sr, Ti, V, W, Y, Zn, and Zr, and X is one or more elements such as or including at least one of F, P, and S. M⁶ and M⁷ may be different elements.

In Chemical Formula 6, 0.6≤x6≤1, 0≤y6≤0.4, and 0≤z6≤0.4; or 0.8≤x6≤1, 0≤y6≤0.2, and 0≤z6≤0.2.

Chemical Formula 7: Liₐ₇Coₓ₇M⁸_{y7}O_{2-b7}X_{b7}.

In Chemical Formula 7, 0.9≤a7≤1.8, 0.7≤x7≤1, 0≤y7≤0.3, 0.9≤x7+y7≤1.1, and 0≤b7≤0.1, M⁸ is or includes one or more elements such as or including at least one of Al, B, Ba, Ca, Ce, Cr, Cu, Fe, Mg, Mn, Mo, Ni, Se, Si, Sn, Sr, Ti, V, W, Y, Zn and Zr, and X is or includes one or more elements such as or including at least one of F, P, and S.

In Chemical Formula 7, 0.8≤x7≤1, and 0≤y7≤0.2; or 0.7≤x7≤0.9, and 0≤y7≤0.2.

For example, the positive electrode active material may be or include a high nickel-based positive electrode active material in which the nickel content is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of metal excluding lithium in a lithium transition metal composite oxide. The high-nickel positive electrode active material may achieve high capacity, and may be applied to high-capacity, high-density rechargeable lithium batteries.

An amount of the positive electrode active material may be in a range of about 60 wt% to about 99.9 wt%, about 70 wt% to about 99.8 wt%, about 80 wt% to about 99 wt%, about 90 wt% to about 99.8 wt%, or about 94 wt% to about 99 wt%, based on 100 wt% of the positive electrode active material layer.

As another example, the positive electrode active material may include a lithium cobalt-based composite oxide, in which case desired or improved capacity and cycle-life characteristics can be realized in a high voltage range.

The description of the aforementioned positive electrode active material is common to the first positive electrode active material and the second positive electrode active material. The composition and amount of the first positive electrode active material and the second positive electrode active material may be independently different from each other, or may be the same.

The positive electrode active material layer may optionally further include at least one of a binder, a conductive material, or a combination thereof, together with the positive electrode active material.

The binder may attach the positive electrode active materials to each other, and attach the positive electrode active material to the positive electrode current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity to the electrode, and any material that does not cause chemical change and conducts electrons can be used in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

In the positive electrode active material layer, an amount of the binder may be in a range of about 0.1 wt% to about 5 wt%, or about 0.5 wt% to about 3 wt%, based on 100 wt% of the positive electrode active material layer, and an amount of the conductive material may be in a range of about 0.1 wt% to about 5 wt%, or about 0.5 wt% to about 3 wt%, based on 100 wt% of the positive electrode active material layer.

The descriptions of the aforementioned binder and conductive material may be common to the first positive electrode active material layer 4 and the second positive electrode active material layer 5. The compositions and amounts of the binder and conductive material included in the first positive electrode active material layer 4 and the second positive electrode active material layer 5 may be independently different from each other, or may be the same.

The positive electrode current collector is not particularly limited as long as the positive electrode current collector has conductivity and does not cause an adverse chemical change in the rechargeable lithium battery, and may be or include, for example, an aluminum (Al) thin film.

### Insulating Layer

According to some example embodiments, the insulating layer 6 is disposed on the second positive electrode active material layer 5. According to some example embodiments, the positive electrode includes an insulating layer 6 disposed on the second positive electrode active material layer 5, so that the rising phenomenon may be improved. In addition, it is possible to reduce or prevent an uncoated region from occurring between the positive electrode active material layer and the insulating layer 6 due to running dispersion when coating the insulating layer according to a known method.

As illustrated in FIG. 3, the insulating layer may be disposed on only one surface of the positive electrode current collector 1. Herein, the insulating layer 6 is disposed on only one surface of the positive electrode current collector 1 includes not only a case that the insulating layer 6 is disposed on one surface of the positive electrode current collector 1 but also a case that the insulating layer 6 is disposed on the second positive electrode active material layer 5 on one surface thereof. The positive electrode according to some example embodiments, even when the insulating layer 6 is disposed on one surface of the positive electrode current collector, may improve safety of a rechargeable lithium battery, and simultaneously or contemporaneously reduce costs in terms of equipment configuration and materials, compared with a case of disposing the insulating layer on both surfaces of the positive electrode current collector.

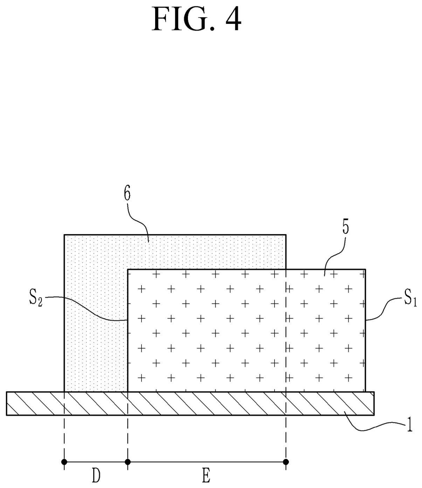

The insulating layer 6 may be disposed on the second positive electrode active material layer 5, and simultaneously or contemporaneously on an uncoated region of the positive electrode current collector 1 along the edge of the second positive electrode active material layer 5. Herein, the uncoated region refers to a region where the positive electrode active material layer is not coated, that is, a region not coated with the positive electrode active material layer. Details thereof are further explained below with reference to FIG. 4.

The edge of the second positive electrode active material layer 5 may indicate a surface (S₁ or S₂) in a thickness direction at both ends of the second positive electrode active material layer 5, and among these two surfaces, the surface S₂ opposite to the surface S₁ neighboring to the first positive electrode active material layer 4 (not shown). Herein, the insulating layer 6 may include a first region "D" and a second region "E." Herein, the first region "D" may refer to a region located on only the positive electrode current collector 1, and the second region "E" may refer to a region located on only the second positive electrode active material layer 5.

The insulating layer may have a width (w₃₁+w₃₂) in a range of about 1 mm to about 10 mm, for example, about 2 mm to about 9 mm, about 3 mm to about 8 mm, or about 4 mm to about 7 mm. When the insulating layer has a width that is within the above ranges, battery safety may be improved or secured. The width of the insulating layer may be measured in the same manner as in for the first positive electrode active material layer and the second positive electrode active material layer. For example, the width of the insulating layer 6 means a width of the second region "E," when located on only the second positive electrode active material layer 5, but a width sum of the first region "D" and the second region "E," when located on the second positive electrode active material layer 5 and simultaneously or contemporaneously on the positive electrode current collector 1 along the edge of the second positive electrode active material layer 5.

The insulating layer may have a thickness in a range of about 0.1 µm to about 30 µm, for example, about 1 µm to about 25 µm, about 5 µm to about 25 µm, or about 10 µm to about 20 µm. The thickness of the insulating layer may be measured by taking an image of a cross-section of the positive electrode with a scanning electron microscope. When the thickness of the insulating layer is not constant, the thickness of the insulating layer may be obtained as an average value. When the thickness of the insulating layer is within the above ranges, an insulation function may be normally performed, thereby reducing or suppressing the rising phenomenon.

The positive electrode including the insulating layer 6 satisfying the aforementioned conditions may not only improve the rising phenomenon, but also improve or secure safety of a rechargeable lithium battery and reduce costs.

Because the insulating layer 6 performs an insulation function, any material used for an insulating layer may be used without limitation.

For example, the insulating layer 6 may include inorganic particles, a resin, or a combination thereof.

The inorganic particles may include at least one of aluminum oxide, silicon dioxide, magnesium oxide, titanium dioxide, hafnium oxide, tin oxide, cerium oxide, nickel oxide, zinc oxide, calcium oxide, zirconium oxide, yttrium oxide, silicon carbide, boehmite (AIO(OH)) or a combination thereof.

An average particle diameter (D₅₀) of the inorganic particles may be in a range of about 0.1 µm to about 20 µm, for example about 0.1 µm to about 10 µm, about 0.1 µm to about 5 µm, and for example, may be greater than about 2 µm, for example about 2.1 µm to about 5 µm. By appropriately adjusting the size of the inorganic particles, the adhesion and heat resistance of the insulating layer may be improved.

The inorganic particles may be included in an amount in a range of about 40 wt% to about 99 wt%, for example, about 45 wt% to about 95 wt%, about 50 wt% to about 90 wt%, about 55 wt% to about 85 wt%, or about 60 wt% to about 80 wt% based on 100 wt% of the insulating layer. When the amount of the inorganic particles satisfies the above range, the insulating layer may achieve desired or improved insulating performance, heat resistance, and fire safety.

When the insulating layer includes inorganic particles, the insulating layer may further include a flame retardant. When a flame retardant is included in the insulating layer, the thermal safety and fire safety of the rechargeable lithium battery can be further improved.

The flame retardant may include at least one of a phosphorus-based flame retardant, a silicone-based flame retardant, a nitrogen-based flame retardant, a sulfur-based flame retardant, a boron-based flame retardant, a halogenated flame retardant, an inorganic oxide flame retardant, or a combination thereof.

The phosphorus-based flame retardant is not particularly limited as long as the phosphorus-based flame retardant is a type generally used in industry, and may include, for example, at least one of phosphate, phosphite, phosphonate, phosphinate, phosphine oxide, phosphazene, or a combination thereof, and for example, phosphazene may be used.

The phosphorus-based flame retardant has an organic functional group such as at least one of an alkyl group, an aryl group, an alkenyl group, and the like, and the organic functional group may be substituted with a halogen group, an amine group, a hydroxyl group, a thiol group, and the like. Herein, the alkyl group may be or include an alkyl group having 1 to 20 carbon atoms, the aryl group may be or include an aryl group having 6 to 20 carbon atoms, and the alkenyl group may be or include an alkenyl group having 2 to 20 carbon atoms. The phosphate may be or include, for example, at least one of a trialkyl phosphate, an alkyldiaryl phosphate, a triaryl phosphate, an ammonium polyphosphate, and the like, and the above phosphinate may be or include a metal dialkyl phosphinate.

As an example, the phosphorus-based flame retardants may include at least one of ammonium phosphate, ammonium polyphosphate, trimethyl phosphate, triethyl phosphate, tripropyl phosphate, tripentyl phosphate, tris(2-ethylhexyl) phosphate, trioctyl phosphate, tris(2-butoxyethyl) phosphate, tris(2-chloroethyl) phosphate, tris(1-chloro-2-propyl) phosphate, tris(2-chloropropyl) phosphate, tris(3-chloropropyl) phosphate, tris(1,3-dichloro-2-propyl) phosphate, tris(2,3-dibromopropyl) phosphate, tris(tribromoneopentyl) phosphate, trimethylpropane methylphosphonic oligomer, pentaerythritol phosphate, cyclic neopentyl thiophosphoric acid anhydride, 2-ethylhexyl diphenyl phosphate, isodecyl diphenyl phosphate, cresyl diphenyl phosphate, triphenyl phosphate, tricresyl phosphate, tert-butylphenyl diphenyl phosphate, tris(2,4-dibromophenyl) phosphate, N,N'-bis(2-hydroxyethyl)aminomethyl phosphate, resorcinol bis(diphenyl phosphate), bisphenol A bis(diphenyl phosphate), tetraphenyl m-p-phenylene diphosphate, tetrakis(2-chloroethyl)dichloroisopentyl diphosphate, dimethyl propane phosphonate, dimethyl methane phosphonate, diethyl ethane phosphonate, diethyl hydroxymethane phosphonate, aluminum diethyl phosphinate, zinc diethyl phosphinate, aluminum dipropyl phosphinate, aluminum 2-carboxyethyl phenyl phosphinate, phosphazene, or a combination thereof. Using a phosphorus flame retardant provides the advantage of desired or improved flame retardancy and thermal stability, a high melting point, and low volatility, so even when applied to a resin, the flame retardant does not deteriorate the inherent properties of the resin.

The nitrogen-based flame retardant is not particularly limited as long as the nitrogen-based flame retardant is a type generally used in industry, and may include, for example, at least one of melamine cyanurate, melamine phosphate, melamine polyphosphate, melamine pyrophosphate, melamine ammonium polyphosphate, melamine ammonium pyrophosphate, melamine borate, melamine sulfate, or a combination thereof.

The sulfur-based flame retardant is not particularly limited as long as it is a type generally used in industry, and may include, for example, at least one of alkylbenzenesulfonic acid, alkylsulfonic acid, naphthelanesulfonic acid, or a combination thereof.

The boron-based flame retardant is not particularly limited as long as the boron-based flame retardant is of a type generally used in industry, and may include, for example, at least one of zinc borate, zinc metaborate, barium metaborate, or a combination thereof.

The halogenated flame retardant is not particularly limited as long as it is a type generally used in industry, and may include, for example, at least one of hexabromobenzene, hexabromobiphenyl ether, tribromophenol, decabromodiphenyl ether, decabromodiphenyl oxide, halogenated polycarbonate, halogenated polystyrene, halogenated polyolefin, or a combination thereof.

The inorganic oxide flame retardant is not particularly limited as long as it is a type generally used in industry, and may include, for example, at least one of aluminum oxide, magnesium oxide, magnesium hydroxide, zinc oxide, titanium oxide, silicon oxide, ammonium hydroxide, or a combination thereof.

The flame retardant may be included in an amount in a range of about 1 part by weight to about 30 parts by weight, for example about 3 parts by weight to about 27 parts by weight, about 5 parts by weight to about 25 parts by weight, about 7 parts by weight to about 22 parts by weight, about 10 parts by weight to about 20 parts by weight, or about 13 parts by weight to about 18 parts by weight based on 100 parts by weight of the inorganic particles. When an amount of the flame retardant satisfies the above range, the overall heat generation may be reduced when a short circuit occurs, thereby improving or ensuring safety and reliability.

The resin may include at least one of a thermosetting resin, a thermoplastic resin, a UV-curable resin, or a combination thereof capable of securing insulating performance.

The thermosetting resin may include at least one of an epoxy resin, a phenol resin, a melamine resin, a urea resin, an unsaturated polyester resin, an alkyd resin, a silicone resin, a polyurethane resin, polyimide, and the like. These may be used alone or in a combination of two or more types.

The thermoplastic resin may include at least one of polytetrafluoroethylene, polyethylene, polypropylene, polystyrene, polyvinyl chloride, polyvinylidene chloride, a fluoro resin, an acrylic resin, polyvinyl acetate, polyamide, polycarbonate, acetal resin, polyphenylene oxide, polyester, polysulfone, and the like. These may be used alone or in a combination of two or more types.

The UV-curable resin may include at least one of urethane acrylate, unsaturated polyester, epoxy acrylate, oxetane, vinyl ether, polyester acrylate, silicone acrylate, alicyclic epoxy resin, glycidyl ether epoxy resin, and the like. These may be used alone, or in a combination of two or more types.

The resin may be included in an amount in a range of about 0.1 wt% to about 50 wt% based on 100 wt% of the insulating layer.

When the insulating layer includes a UV-curable resin, a solvent may be further included to control viscosity. When the UV-curable resin is included, when no solvent is included, the viscosity may be too high and may not be easy or convenient to coat. The type of the solvent is not limited, but for example, an organic solvent such as or including at least one of N-methyl-2-pyrrolidone, acetone, toluene, ethanol, isopropyl alcohol, methyl ethyl ketone, ethyl acetate, and the like, or a water-soluble solvent such as distilled water, glycol ether, and the like, may be used.

When the insulating layer includes a UV-curable resin, a photopolymerization initiator may be further included. The known photopolymerization initiator may be used without limitation, and may be or include, for example, at least one of bis(2,4,6-trimethylbenzoyl)-phenylphosphine oxide, 2,4,6-trimethylbenzoyldiphenylphosphine oxide, 1,2-octanedione, 1-[4-(phenylthio)phenyl-2-(O-benzoyloxime)], ethanone, 1-[9-ethyl-6-(2-methylbenzoyl)-9H-carbazol-3-yl]-1-(O-acetyloxime), 2-benzyl-2-dimethylamino-1-(4-morpholinophenyl)-butanone-1,2-(dimethylamino)-2-[(4-methylphenyl)methyl]-1-[4-(4-morpholinyl)phenyl]-1-butanone, benzoin, benzoin methyl ether, benzoin ethyl ether, benzoin isopropyl ether, benzoin-n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexylphenyl ketone, 2-methyl-1-[4-(methylthio)phenyl]-2-morpholino-propan-1-one, 4-(2-hydroxyethoxy)phenyl-2-(hydroxy-2-propyl)ketone, benzophenone, p-phenylbenzophenone, 4,4'-diethylaminobenzophenone, dichlorobenzophenone, 2-methylanthraquinone, 2-ethylanthraquinone, 2-tert-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylaminobenzoic acid ethyl ester, and thioxanthones. These may be used alone, or in a combination of two or more types.

The photopolymerization initiator may be included in an amount in a range of about 0.01 parts by weight to about 10 parts by weight, for example, about 0.1 parts by weight to about 5 parts by weight, or about 0.5 parts by weight to about 3 parts by weight based on 100 parts by weight of the UV-curable resin. When the content of the photopolymerization initiator satisfies the above range based on 100 parts by weight of the UV-curable resin, a curing speed and degree that can improve or ensure processability can be achieved.

Furthermore, the insulating layer may further include a binder. The binder may adhere the materials within the insulating layer to each other, and adhere the insulating layer to the positive electrode current collector or the second positive electrode active material layer. The binder may be or include a water-insoluble binder, a water-soluble binder, or a combination thereof.

The water-insoluble binder may be or include at least one of polyvinylchloride, carboxylated polyvinyl chloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder or a polymer resin binder. The rubber-based binder may be or include at least one of a styrene-butadiene rubber (SBR), an acrylated styrene-butadiene rubber, an acrylonitrile-butadiene rubber (ABR), an acrylic rubber, a butyl rubber, a fluorine rubber, and a combination thereof. The polymer resin binder may be or include at least one of polyethylene oxide, polyvinylpyrrolidone, polyepichlorohydrin, polyphosphazene, polyacrylonitrile, ethylene propylene diene copolymer, polyvinyl pyridine, chlorosulfonated polyethylene, latex, a polyester resin, an acrylic resin, a phenol resin, an epoxy resin, a polyvinyl alcohol, and a combination thereof.

When using a water-soluble binder as the binder, the binder may further include a cellulose-based compound capable of imparting viscosity. The cellulose-based compound may be or include at least one or more types of carboxymethyl cellulose, hydroxypropyl methyl cellulose, methyl cellulose, or an alkali metal salt thereof. The alkali metal may be or include at least one of Na, K, or Li.

The binder may be included in an amount in a range of about 0.1 wt% to about 40 wt%, for example about 1 wt% to about 35 wt%, about 5 wt% to about 35 wt%, about 10 wt% to about 35 wt%, about 20 wt% to about 35 wt%, or about 25 wt% to about 35 wt% based on 100 wt% of the insulating layer.

The insulating layer may further include other additives as long as the insulating layer can secure insulating performance. Because such additives are known, they are omitted below.

The second positive electrode active material layer and the insulating layer may be in contact with each other. When the second positive electrode active material layer and the insulating layer are in contact with each other, a mixed region may exist at the interface where the components of the second positive electrode active material layer and the components of the insulating layer are mixed.

### Electrode Assembly

In some example embodiments, an electrode assembly includes the aforementioned positive electrode, a negative electrode, and a separator interposed between the positive electrode and the negative electrode.

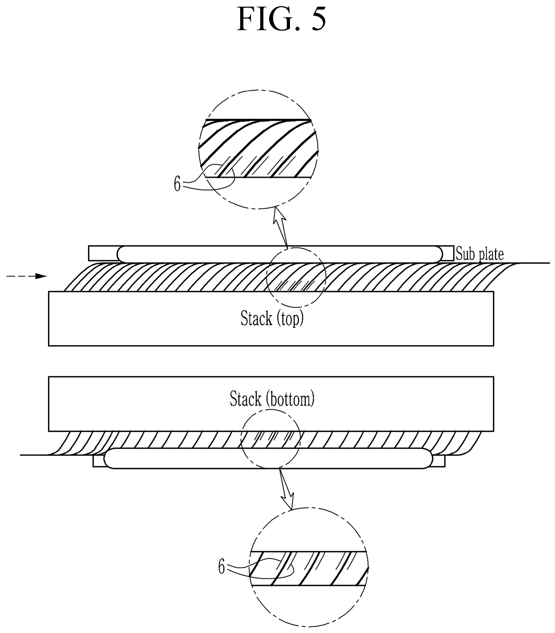

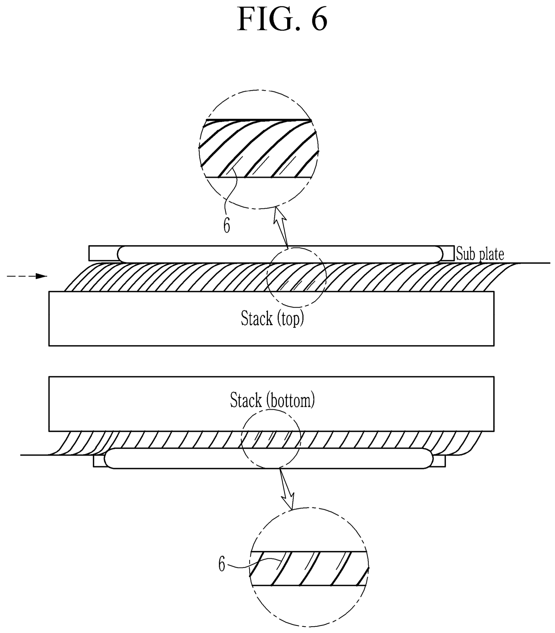

FIG. 5 schematically illustrates a stacking process of an electrode assembly in which an insulating layer is coated on both surfaces of the positive electrode current collector, and FIG. 6 schematically illustrates a stacking process of an electrode assembly in which an insulating layer is coated on one surface of the positive electrode current collector according to some example embodiments.

Referring to the enlarged portion in FIG. 5, an insulating layer 6 is typically coated on both surfaces of the positive electrode current collector 1. In this way, when an insulating layer is coated on both surfaces of the positive electrode current collector, loss of the insulating coating material and process occurs, which causes an increase in material and process costs.

On the other hand, in the positive electrode according to some example embodiments, the insulating layer 6 may be disposed on only one surface of the positive electrode current collector 1 as shown in the enlarged portion of FIG. 6. In this case, it is possible to reduce material costs and process costs, to secure the function of the insulating layer 6 according to the structure of the positive electrode according to some example embodiments, and to reduce or suppress a rising phenomenon of the positive electrode plate.

The insulating layer may exist only in one direction within the electrode assembly. Herein, the existence in only one direction means that when one surface of the positive electrode current collector 1 is referred to as the first surface, and the surface opposite to the first surface is referred to as the second surface, all the insulating layers within the electrode assembly are equally disposed on only one of the first surface and the second surface of the positive electrode current collector. An electrode assembly according to some example embodiments has an insulating layer present in only one direction, thereby reducing material costs and process costs.

### Negative Electrode

The negative electrode may include a negative electrode current collector and a negative electrode active material layer on the negative electrode current collector, and the negative electrode active material layer may include a negative electrode active material.

The negative electrode active material may include at least one of a material capable of reversibly intercalating/deintercalating lithium ions, a lithium metal, a lithium metal alloy, a material capable of doping/dedoping lithium, or a transition metal oxide.

The material capable of reversibly intercalating/deintercalating the lithium ions may be or include a carbon-based negative electrode active material, and may be or include for example, crystalline carbon, amorphous carbon, or a combination thereof. The crystalline carbon may be or include graphite such as non-shaped, sheet-shaped, flake-shaped, sphere-shaped, or fiber-shaped natural graphite or artificial graphite, and the amorphous carbon may be or include a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may include at least one of Sn, SnO₂, a Sn alloy, or a combination thereof.

The silicon-carbon composite may be or include a composite of silicon and amorphous carbon. An average particle diameter (D₅₀) of the silicon-carbon composite particles can be, for example, in a range of about 0.5 µm to about 20 µm. According to some example embodiments, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core. The crystalline carbon may be or include artificial graphite, natural graphite, or a combination thereof. The amorphous carbon may be or include a soft carbon, a hard carbon, a mesophase pitch carbonization product, calcined coke, and the like.

When the silicon-carbon composite includes silicon and amorphous carbon, an amount of the silicon may be in a range of about 10 wt% to about 50 wt%, and an amount of the amorphous carbon may be in a range of about 50 wt% to about 90 wt% based on 100 wt% of the silicon-carbon composite. In addition, when the silicon-carbon composite includes silicon, amorphous carbon, and crystalline carbon, an amount of silicon may be in a range of about 10 wt% to about 50 wt%, an amount of crystalline carbon may be in a range of about 10 wt% to about 70 wt%, and an amount of amorphous carbon may be in a range of about 20 wt% to about 40 wt% based on 100 wt% of the silicon-carbon composite.

Additionally, a thickness of the amorphous carbon coating layer may be in a range of about 5 nm to about 100 nm. An average particle diameter (D₅₀) of the silicon particles (primary silicon particles) may be in a range of about 10 nm to about 1 µm, or about 10 nm to about 200 nm. The silicon particles may be present as silicon alone, in the form of a silicon alloy, or in an oxidized form. The oxidized form of the silicon may be represented as SiOₓ (0<x≤2). For example, the atomic content ratio of Si:O, which indicates the degree of oxidation, may be in a range of about 99:1 to about 33:67. In the present specification, as used herein, when a definition is not otherwise provided, an average particle diameter (D₅₀) indicates a diameter of a particle where a cumulative volume is about 50 volume% in a particle size distribution.

The Si-based negative electrode active material or the Sn-based negative electrode active material may be used in combination with a carbon-based negative electrode active material. When using a mixture of a Si-based negative electrode active material or a Sn-based negative electrode active material and a carbon-based negative electrode active material, the mixing ratio may be in a range of about 1:99 to about 90:10 by weight.

The negative electrode active material layer may optionally further include at least one of a binder, a conductive material, or a combination thereof, together with the negative electrode active material.

The binder may attach the negative electrode active material particles to each other, and attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material capable of being fibrous, and may be, for example, polytetrafluoroethylene, polyvinylidene fluoride, a vinylidene fluoride-hexafluoropropylene copolymer, polyethylene oxide, or a combination thereof.

The conductive material may impart conductivity to the electrode, and any material that does not cause chemical change and conducts electrons can be used in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode active material may be included in an amount in a range of about 90 wt% to about 99.8 wt% or about 94 wt% to about 99 wt% based on 100 wt% of the negative electrode active material layer, the binder may be included in an amount in a range of about 0.1 wt% to about 5 wt% or about 0.5 wt% to about 3 wt% based on 100 wt% of the negative electrode active material layer, and the conductive material may be included in an amount in a range of about 0.1 wt% to about 5 wt% or about 0.5 wt% to about 3 wt% based on 100 wt% of the negative electrode active material layer.

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of, e.g., a foil, sheet, or foam. A thickness of the negative electrode current collector may be, for example, in a range of about 1 µm to about 20 µm, about 5 µm to about 15 µm, or about 7 µm to about 10 µm.

### Separator

The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including at least any one of polymer, for example, polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene(for example, TEFLON^{®}), or a copolymer or mixture of two or more thereof.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be in a range of about 0.5 µm to about 20 µm, for example, about 1 µm to about 10 µm, or about 1 µm to about 5 µm.

### Electrolyte

The electrode assembly may further include an electrolyte. The electrolyte may be impregnated into the separator.

The electrolyte may be or include, for example, an electrolyte solution, which includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may be or include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethylpropionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. For example, the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are integers of 1 to 20, lithium trifluoromethane sulfonate, lithium tetrafluoroethanesulfonate, lithium difluorobis(oxalato)phosphate (LiDFBOP), and lithium bis(oxalato) borate (LiBOB).

### Rechargeable Lithium Battery

A rechargeable lithium battery including the aforementioned electrode assembly according to some example embodiments is provided.

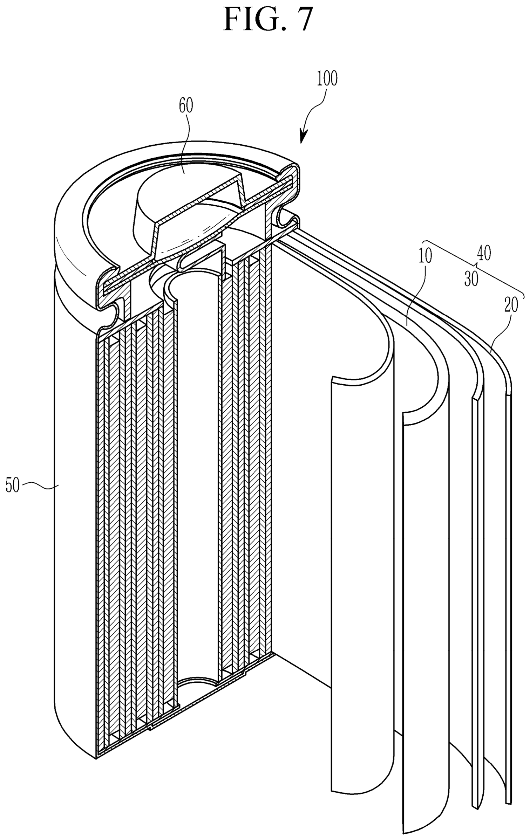

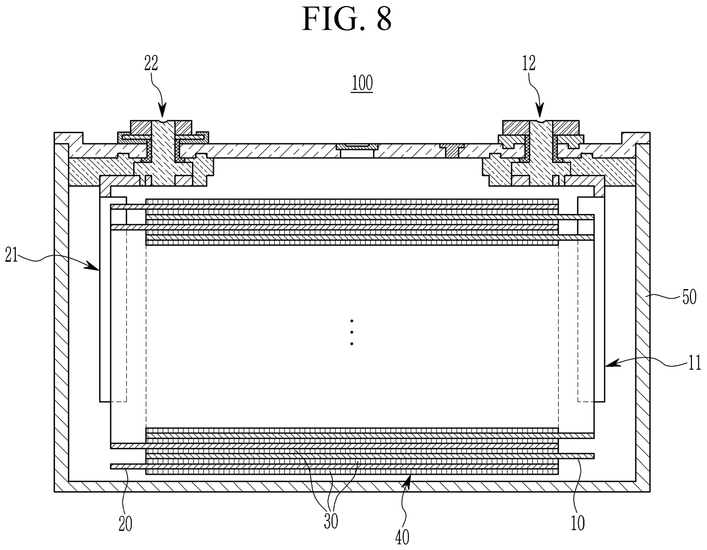

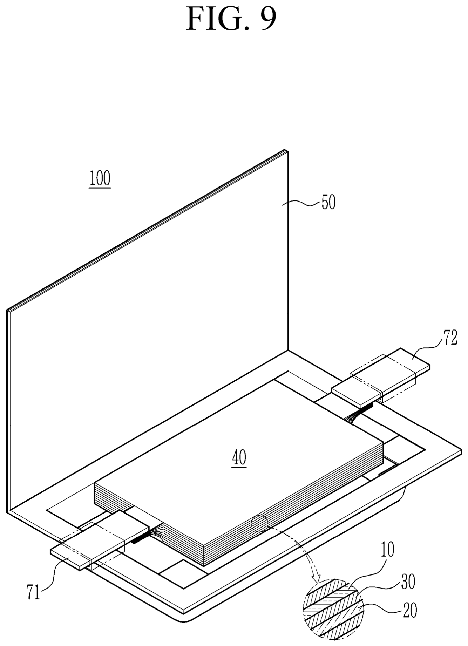

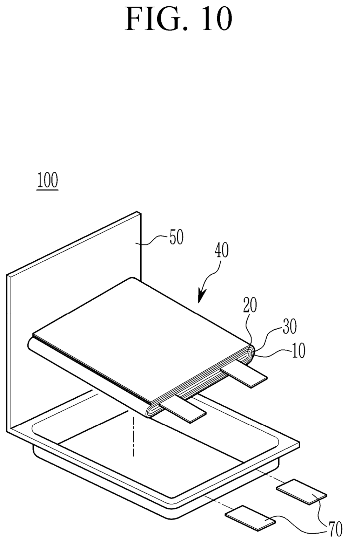

The rechargeable lithium battery may be classified into cylindrical, prismatic, pouch, coin, and the like depending on its shape. FIGS. 7 to 10 are schematic views illustrating rechargeable lithium batteries according to some example embodiments. FIG. 7 shows a cylindrical battery, FIG. 8 shows a prismatic battery, and FIGS. 9 and 10 show pouch-type batteries. Referring to FIGS. 7 to 10, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte (not shown). The rechargeable lithium battery 100 may include a sealing member 60 that seals the case 50 as shown in FIG. 7. Additionally, in FIG. 8, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 9 and 10, the rechargeable lithium battery 100 includes an electrode tab 70 illustrated in FIG. 10, or a positive electrode tab 71 and a negative electrode tab 72 illustrated in FIG. 9, the electrode tabs 70/71/72 forming an electrical path for inducing the current formed in the electrode assembly 40 to the outside.

Examples and comparative examples of the present disclosure are described below. However, the following examples are only examples of the present disclosure, and the present disclosure is not limited to the following examples.

### Example 1

### (1) Manufacturing of Positive Electrode

LiNi_{0.94}Co_{0.04}Al_{0.1}Mn_{0.01}O₂ as a positive electrode active material, polyvinylidene fluoride as a binder, and carbon nanotube as a conductive material were mixed in a weight ratio of 96:2:2 (positive electrode active material:binder:conductive material) to prepare a positive electrode active material composition. This composition was dispersed in an N-methyl pyrrolidone solvent to prepare a positive electrode active material slurry.

N-methyl pyrrolidone as a solvent, boehmite with an average particle diameter (D₅₀) of 2.4 µ m as inorganic particles, and polyvinylidene fluoride as a binder were mixed in a weight ratio of 15:60:25 (solvent: inorganic particles: binder) to prepare a composition for an insulating layer.

The positive electrode active material slurry was coated on the center of an aluminum foil and dried by using a wide spacer to form a first positive electrode active material layer, and the same slurry was also coated and dried on the end portions of the aluminum foil, which was not coated with the first positive electrode active material layer, by using a narrow spacer to form a second positive electrode active material layer. On the second positive electrode active material layer, the composition for forming an insulating layer was coated and dried by using the narrow spacer to form an insulating layer.

Based on 100 wt% of the insulating layer, the inorganic particles were at 70.6 wt%, and the binder was at 29.4 wt%.

The second positive electrode active material layer had a thickness, which was 55% of the thickness of the first positive electrode active material layer, and a sum of the thickness (h₂) of the second positive electrode active material layer and a thickness (h₃) of the insulating layer to the thickness (h₁) of the first positive electrode active material layer had a ratio ((h₂+h₃)/h₁) of 0.4, and in addition, the first positive electrode active material layer had a width of 200 mm, the second positive electrode active material layer had a width of 4 mm, and the insulating layer had a width of 5 mm and a thickness of 15 µm.

### (2) Manufacturing of Rechargeable Lithium Battery Cell

An artificial graphite (AGP-2L-P, BTR New Material Group Co., Ltd.) as a negative electrode active material, styrene-butadiene rubber (HCM-815, Hansol Chemical) as a binder, and a conductive material (Litx35, DenkaKorea Co., Ltd.) were mixed in a weight ratio of 97:2:1 (negative electrode active material: binder: conductive material) to prepare a negative electrode active material composition. This composition was dispersed in water as a solvent to prepare a negative electrode active material slurry, which was coated on a copper thin film substrate, and then dried to manufacture a negative electrode.

An electrode assembly was manufactured by interposing a 10 µm-thick polyethylene separator between the positive electrode and the negative electrode so that the portion of the positive electrode where the insulating layer was formed was directed toward only one direction, and then inserted into a case, and an electrolyte was injected thereinto to manufacture a rechargeable lithium battery cell. Herein, that the portion of the positive electrode where the insulating layer was formed was directed toward only one direction, as shown in FIG. 6, means that the insulating layer existed only in one direction. The electrolyte was prepared by mixing EC (ethylenecarbonate): EMC (ethylmethylcarbonate): DMC (dimethylcarbonate) in a volume ratio of 2:4:4 and dissolving 1.15 M LiPF₆ in the mixed solvent.

### Comparative Example 1

A positive electrode and a rechargeable lithium battery cell were manufactured substantially in the same manner as in Example 1, with a difference that the positive electrode active material slurry was coated and dried on an aluminum thin film with a wide spacer to form a positive electrode active material layer, and at the end portions of the positive electrode active material layer, the composition for forming an insulating layer was coated and dried to form an insulating layer in the manufacture of the positive electrode of Comparative Example 1.

### Evaluation Example 1. Change in Thickness of Electrode Plate According to Measurement Position

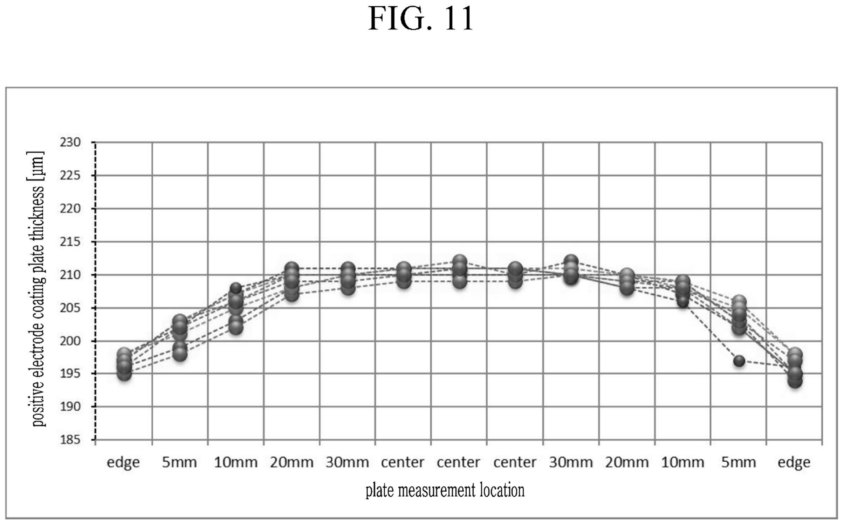

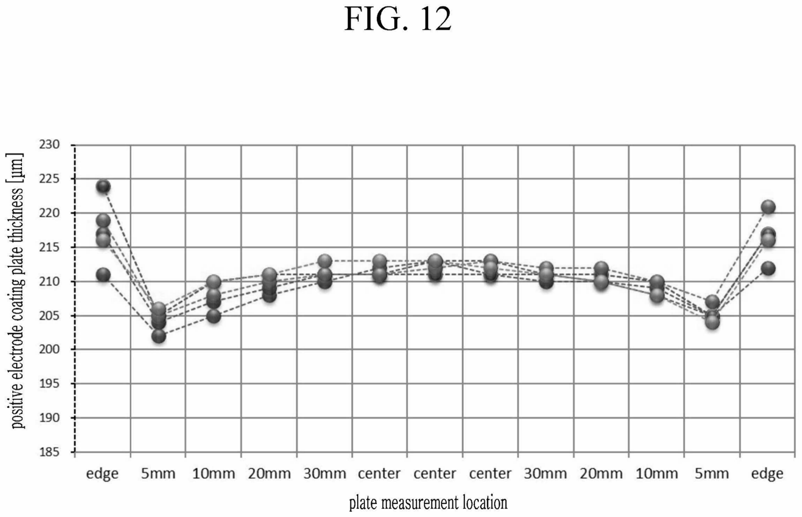

The positive electrodes of Example 1 and Comparative Example 1 were measured with respect to an electrode plate thickness according to a measurement position of the positive electrodes. For example, the measurement was manually performed by using a micrometer device, and the results are shown in FIGS. 11 and 12.

Referring to FIGS. 11 and 12, the positive electrode of Example 1 exhibited no rising phenomenon at the edge portion of the positive electrode current collector, but the positive electrode of Comparative Example 1 exhibited a rising phenomenon at the edge portion of the positive electrode current collector.

Accordingly, rather than forming a positive electrode active material layer once at the edge and center portions of a positive electrode current collector as in Comparative Example 1, as in Example 1, after positive electrode active material layer was formed separately at the edge portion and the center portion of the positive electrode current collector, when an insulating layer was formed on the second positive electrode active material layer at the edge portion, the rising phenomenon was confirmed to be reduced or suppressed at the edge portion of an electrode plate.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 1: | positive electrode current collector r | | |
| 2: | positive electrode active material layer | | |
| 3: | insulating layer | | |
| 4: | first positive electrode active material layer | | |
| 5: | second positive electrode active layer | | |
| 6: | insulating layer | | |
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10) for a rechargeable lithium battery (100), the positive electrode (10) comprising:
a positive electrode current collector (1);
a positive electrode active material layer on at least one surface of the positive electrode current collector (1); and
an insulating layer (6) on at least one surface of the positive electrode current collector (1);
wherein the positive electrode active material layer comprises:
a first positive electrode active material layer (4) having a substantially constant thickness; and
a second positive electrode active material layer (5) located at an edge portion of the positive electrode current collector (1) and having a thickness in a range of 10% to 80% of the thickness of the first positive electrode active material layer (4);
the insulating layer (6) is disposed on the second positive electrode active material layer (5), and
a sum of a thickness (h2) of the second positive electrode active material layer (5) and a thickness (h1) of the insulating layer (6) is smaller than a thickness (h1) of the first positive electrode active material layer (4).

2. The positive electrode (10) as claimed in claim 1, wherein a ratio of the sum of the thickness (h2) of the second positive electrode active material layer (5) and the thickness (h1) of the insulating layer (6) to the thickness (h1) of the first positive electrode active material layer (4) is in a range of 0.1 to 1.0.

3. The positive electrode (10) as claimed in any of the previous claims, wherein a width (w1) of the first positive electrode active material layer (4) is in a range of 50 mm to 500 mm.

4. The positive electrode (10) as claimed in any of the previous claims, wherein a width (w2) of the second positive electrode active material (5) layer is in a range of 1 mm to 5 mm.

5. The positive electrode (10) as claimed in any of the previous claims, wherein:
the first positive electrode active material layer (4) comprises a first positive electrode active material, and
the second positive electrode active material layer (5) comprises a second positive electrode active material.

6. The positive electrode (10) as claimed in claim 5, wherein the first positive electrode active material and the second positive electrode active material independently comprise a lithium transition metal composite compound; and/or wherein the first positive electrode active material layer (4) and the second positive electrode active material layer (5) independently comprise at least one of a binder, a conductive material, and a combination thereof.

7. The positive electrode (10) as claimed in any of the previous claims, wherein the insulating layer (6) is disposed on only one surface of the positive electrode current collector (1).

8. The positive electrode (10) as claimed in any of the previous claims, wherein the insulating layer (6) is disposed on the second positive electrode active material layer (5) and on an uncoated region of the positive electrode current collector (1) along the edge of the second positive electrode active material layer (5).

9. The positive electrode (10) as claimed in any of the previous claims, wherein a width of the insulating layer (6) is in a range of 1 mm to 10 mm.

10. The positive electrode (10) as claimed in any of the previous claims, wherein a thickness, and preferably an average thickness, of the insulating layer (6) is in a range of 0.1 µm to 30 µm.

11. The positive electrode (10) as claimed in any of the previous claims, wherein the insulating layer (6) comprises at least one of inorganic particles and a resin, and a combination thereof.

12. The positive electrode (10) as claimed in claim 11, wherein:
the inorganic particles comprise at least one of aluminum oxide, silicon dioxide, magnesium oxide, titanium dioxide, hafnium oxide, tin oxide, cerium oxide, nickel oxide, zinc oxide, calcium oxide, zirconium oxide, yttrium oxide, and silicon carbide, boehmite (AIO(OH)), and a combination thereof, and
the resin comprises at least one of a thermosetting resin, a thermoplastic resin, and a UV-curable resin, and a combination thereof.

13. An electrode assembly (40) for a rechargeable lithium battery (100), the electrode assembly (40) comprising:
the positive electrode (10) as claimed in any of claims 1 to 12,
a negative electrode (20), and
a separator (30) between the positive electrode (10) and the negative electrode (20).

14. The electrode assembly (40) as claimed in claim 13, wherein in the electrode assembly (40), the insulating layer (6) is disposed only in one direction.

15. A rechargeable lithium battery (100) comprising an electrode assembly (40) as claimed in any of claims 13 or 14; or comprising a positive electrode (10) as claimed in any of claims 1 to 14.
